# EUROPÄISCHE PATENTANMELDUNG

(11) **EP 1 466 685 A1**
(43) Veröffentlichungstag der Anmeldung: **13.10.2004**
(21) Anmeldenummer: 04005876.0
(22) Anmeldetag: 11.03.2004
(51) Int. Cl.: B23B 31/26

(54) **Bearbeitungsspindel mit Ausstossfunktion**

(30) Priorität: 09.04.2003 DE 10316244
(71) Anmelder: SIEMENS AKTIENGESELLSCHAFT, 80333 München (DE)
(72) Erfinder: Herla, Max, 97520 Röthlein (DE)

(57) **Zusammenfassung**

Es soll ein vereinfachter Werkzeugausstoß bei einer Bearbeitungsspindel gewährleistet werden. Hierzu wird die Antriebswelle (6) der Antriebseinrichtung (2) der Bearbeitungsspindel verwendet, um eine Zugstange (12) durch die hohle Spindelkopfwelle (11) einer Spindelkopfeinrichtung (3) axial zu verschieben. Dabei ist die Antriebswelle (6) mit der Zugstange (12) mechanisch gekoppelt, um eine Axialbewegung der Antriebswelle (6) auf die Zugstange (12) zu übertragen.

## Beschreibung

Die vorliegende Erfindung betrifft eine Spindelvorrichtung für Werkzeugmaschinen mit einer Antriebseinrichtung, die eine Antriebswelle umfasst, einer Spindelkopfeinrichtung, deren hohle Spindelkopfwelle von der Antriebseinrichtung antreibbar ist, zur Aufnahme eines Werkzeugs, und einer Zugstange, die in der hohlen Spindelkopfwelle axial verschiebbar angeordnet ist. Ferner betrifft die vorliegende Erfindung ein entsprechendes Verfahren zum Betreiben einer Spindelvorrichtung für Werkzeugmaschinen, die eine Antriebseinrichtung mit einer Antriebswelle und einer Spindelkopfeinrichtung mit einer Zugstange umfasst.

Üblicherweise besitzt beispielsweise eine Motorfrässpindel eine Welle mit aufgeschrumpftem Rotor, der zwischen zwei Lagerpaketen angeordnet ist. Im Inneren der Welle befindet sich ein Werkzeugspannsystem, bestehend aus Spannkopf, Zugstange und typischerweise einem Tellerfederpaket. Am Ende der Spindeleinheit ist häufig eine Spannsystemabfrage an der Zugstange und ein Werkzeuglösekolben angebaut. Eine optionale wälzgelagerte Drehdurchführung muss über ein Verbindungsstück angekoppelt werden.

Eine derartige Bearbeitungsspindel mit Werkzeugspanner ist aus der deutschen Offenlegungsschrift DE 199 37 447 bekannt. In der Bearbeitungsspindel ist eine mit dieser rotierende, axial verschiebbare Zugstange zum Spannen beziehungsweise Lösen des Werkzeugspanners angeordnet. Zumindest ein berührungslos arbeitender Sensor ist zum Erfassen der Stellungen des Werkzeugspanners vorgesehen. Zur besseren Kontrolle der Werkzeugeinspannung ist ein den Verschiebeweg der Zugstange stufenlos erfassender Sensor vorgesehen.

Darüber hinaus ist in der deutschen Offenlegungsschrift DE 36 29 453 eine elektromechanische Vorrichtung zum Erzeugen einer Axialkraft für die Betätigung von Spannzangen beschrieben. Mittels eines Elektromotors wird über ein Stirnradgetriebe und einen Spindeltrieb eine Axialbewegung auf eine hohl ausgebildete Zugstange ausgeübt. Um bei einem geringen Bauvolumen die bei der Betätigung auftretenden Reibkräfte herabzusetzen, ist der Rotor mit einem Ritzel verbunden, in das ein Zahnrad eingreift, das auf einer axial unverschiebbar in einem Gehäuse gelagerten Spindel befestigt ist, auf der eine Spindelmutter angeordnet ist, die ihrerseits mit der α-xial beweglich im Gehäuse gelagerten Zugstange verbunden ist. Für die Bewegung der Zugstange ist damit ein separater Elektromotor vorzusehen.

In verschiedenen Fällen besteht der Bedarf, eine komplette Bearbeitungsspindeleinheit in eine Antriebseinheit und eine angekuppelte Vorsatzspindel zu teilen. Gründe hierfür sind unter anderem der Austausch beziehungsweise automatische Wechsel der Vorsatzspindel, um beispielsweise größere oder kleinere Werkzeuge einsetzen zu können, oder die Zwischenschaltung eines beispielsweise zweistufigen Planetengetriebes, um ein höheres Drehmoment zu erzielen.

Bei den bekannten Bearbeitungsspindeln ergibt sich nun das Problem, dass die Zugstange, die in der Vorsatzspindel bleiben muss, durch die Kupplung und die Motorwelle hindurchgeführt werden muss, um hinter den Motor bis zur Werkzeugwechselvorrichtung und Zugstangenabfrage zu reichen. Dies ergibt, wenn es aus Platzgründen überhaupt möglich ist, neben hohem konstruktiven Aufwand unter anderem auch dynamische Probleme in Form von Schwingungen. Beim Wechsel der Vorsatzspindel müsste auch im Bereich hinter dem Antriebsmotor montiert werden, womit der Sinn der Teilung nicht mehr erreicht wäre.

Die Aufgabe der vorliegenden Erfindung besteht nun darin, eine Spindelvorrichtung für Werkzeugmaschinen und ein entsprechendes Verfahren zum Betreiben einer derartigen Spindelvorrichtung vorzuschlagen, bei denen in einfacher Weise ein automatischer Werkzeugwechsel gewährleistet ist.

Erfindungsgemäß wird diese Aufgabe gelöst durch eine Spindelvorrichtung für Werkzeugmaschinen mit einer Antriebseinrichtung, die eine Antriebswelle umfasst, einer Spindelkopfeinrichtung, deren hohle Spindelkopfwelle von der Antriebseinrichtung antreibbar ist, zur Aufnahme eines Werkzeugs, und einer Zugstange, die in der hohlen Spindelkopfwelle axial verschiebbar angeordnet ist, sowie einer Verschiebeeinrichtung, mit der die Antriebswelle axial verschiebbar ist, wobei die Antriebswelle mit der Zugstange mechanisch gekoppelt ist, so dass die Zugstange mit der Verschiebeeinrichtung verschiebbar ist.

Ferner ist erfindungsgemäß vorgesehen ein Verfahren zum Betreiben einer Spindelvorrichtung für Werkzeugmaschinen, die eine Antriebseinrichtung mit einer Antriebswelle und eine Spindelkopfeinrichtung zur Aufnahme eines Werkzeugs mit einer Zugstange umfasst, durch axiales Verschieben der Zugstange mit Hilfe der Antriebswelle in eine erste Position und axiales Zurückschieben der Antriebswelle in eine zweite Position, so dass die Zugstange zurückbewegt wird oder zurückbewegbar ist.

Der Erfindung liegt der Gedanke zu Grunde, die Lagerbüchsen des Antriebsmotors so auszuführen, dass sie sich zwischen zwei Anschlägen insbesondere hydraulisch verschieben lassen, da die Lagerbüchsen aus thermischen Gründen ohnehin typischerweise mittels Hydraulik axial vorgespannt werden. Die Spindelkopfeinrichtung und die Antriebseinrichtung können dabei voneinander trennbar sein, wobei dann auch die Antriebswelle und die Zugstange trennbar gekoppelt sind. Hierzu kann die Spindelkopfwelle an dem zur Antriebswelle zugewandten Ende als Keilwelle und die Antriebswelle an ihrer Stirnseite als entsprechendes kupplungsfähiges Hohlrad oder umgekehrt ausgeformt sein.

Ist der Spindelkopf von der Antriebseinrichtung abnehmbar, so kann die Antriebswelle eine zentrale Bohrung zum Medientransport aufweisen, in die herausnehmbar ein Rohr der Zugstange mündet. Alternativ kann die Zugstange eine zentrale Bohrung zum Medientransport aufweisen, in die dann herausnehmbar ein Rohr der Antriebswelle mündet. Auf diese Weise kann dann beispielsweise Schmiermittel durch die Antriebswelle zum Werkzeug geliefert werden.

Die Antriebswelle kann mit der Zugstange einteilig ausgeformt sein. Die Zugstange und die Spindelkopfwelle haben dann entsprechende Verzahnungen beziehungsweise Verkeilungen aufzuweisen, so dass das Drehmoment von der Antriebswelle auf die Spindelkopfwelle übertragen werden kann.

Die Antriebseinrichtung kann einen Elektromotor umfassen, dessen Rotor auf die Antriebswelle montiert ist. Da die Antriebswelle jedoch verschoben wird, sollten die Abmessungen des Stators des Elektromotors derart gewählt werden, dass der Stator den Rotor in jeder Verschiebeposition vollständig umgibt. Dadurch kann sichergestellt werden, dass der Elektromotor in jeder Verschiebeposition maximalen Wirkungsgrad besitzt. Die Verschiebeeinrichtung kann nach hydraulischem Prinzip, pneumatischen oder elektromechanischem Prinzip betrieben werden. Es bietet sich jedoch an, die Antriebswelle hydraulisch zu verschieben, da, wie oben beschrieben, eine Hydraulikeinrichtung zum Vorspannen der Lagerbüchsen vielfach bereits vorhanden ist. Während des Betriebes kann die Zugstange an die Antriebswelle gefahren werden. Dies hat den Vorteil, dass dann mit der Position der Antriebswelle auch die Position der Zugstange bekannt ist.

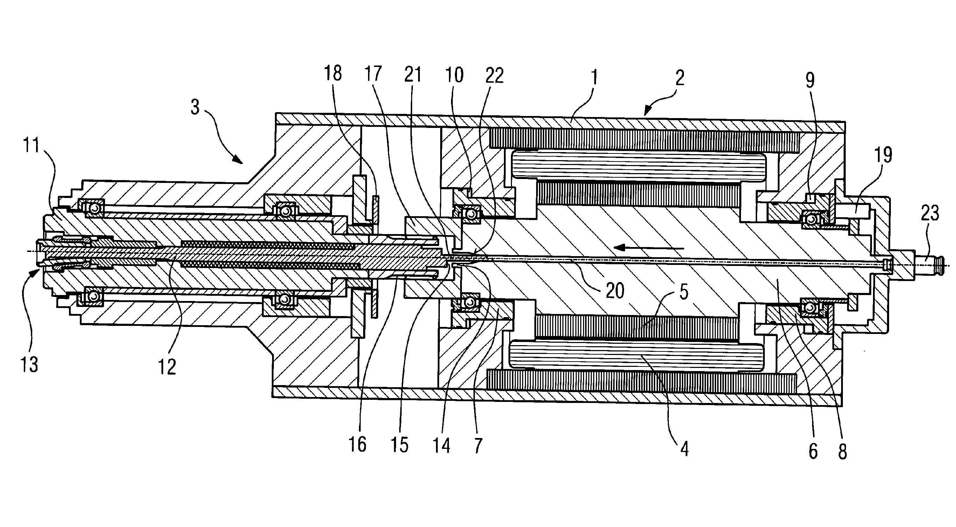

Die vorliegende Erfindung wird nun anhand der beigefügten Zeichnung näher erläutert, die einen Querschnitt durch eine erfindungsgemäße Motorfrässpindel darstellt. Die nachfolgend beschriebene Ausführungsform stellt ein bevorzugtes Ausführungsbeispiel der vorliegenden Erfindung dar.

In der Figur ist eine trennbare Motorfrässpindel dargestellt, die ein Gehäuse 1 besitzt. In dem Gehäuse 1 ist eine Antriebseinrichtung 2 und eine Spindelkopfeinrichtung beziehungsweise eine Vorsatzspindel 3 angeordnet.

Die Antriebseinrichtung 2 besteht im Wesentlichen aus einem Elektromotor einschließlich Stator 4 und Rotor 5, der auf eine Antriebswelle 6 aufgeschrumpft ist. Die Antriebswelle 6 ist beidseitig in Lagerhülsen 7 und 8 gelagert.

Die Lagerhülsen 7 und 8 sind axial verschiebbar mittels eines nicht dargestellten Hydrauliksystems. In dem in der Figur dargestellten Fall ist ein Kolbenraum 9 unter Druck gesetzt, so dass die Lagerhülse 8 einschließlich der Antriebswelle aber auch der Lagerhülse 7 nach rechts verschoben ist. Ein zweiter Kolbenraum 10 ist an der Lagerbüchse 7, die zu der Vorsatzspindel gewandt ist, vorgesehen. Falls dieser zweite Kolbenraum 10 unter Druck gesetzt wird, wird die Lagerbüchse 7 einschließlich der Antriebswelle 6 und der Lagerbüchse 8 nach links in Richtung auf die Vorsatzspindel 3 geschoben.

Die Vorsatzspindel 3 besteht im Wesentlichen aus einer Spindelkopfwelle 11 und einer Zugstange 12, mit der eine Spannzange 13 für Werkzeuge betätigbar ist. In der Figur ist die Zugstange 12 und die Spannzange 13 in zwei verschiedenen Positionen dargestellt. In der oberen Hälfte der Zeichnung befinden sich beide in einem vorgeschobenen Zustand, in dem ein Werkzeug ausgestoßen wird. In der unteren Hälfte befindet sich die Zugstange 12 und die Spannzange 13 in einem zurückgezogenen Zustand, in dem das Werkzeug gehalten wird. Der axiale Druck der Antriebswelle 6 wird über einen rohrförmigen Fortsatz 14 der Antriebswelle gewährleistet, der auf eine entsprechende Schulter 15 der Zugstange 12 drückt.

Zur Übertragung des Drehmoments von der Antriebswelle 6 auf die Spindelkopfwelle 11 ist eine Kupplung bestehend aus dem keilwellenförmig gestalteten Ende 16 der Spindelkopfwelle 11 und einem entsprechenden Hohlrad 17, das drehfest mit der Antriebswelle 6 verbunden ist, vorgesehen. Das Hohlrad 17 greift axial verschiebbar, drehfest in das Keilwellenende 16 ein.

Ein Positionsgeber 18 dient zum Abgreifen der axialen Position der Zugstange 12 und zum Liefern eines entsprechenden Positionssignals an eine nicht dargestellte Ansteuerschaltung der Motorfrässpindel.

An dem der Vorsatzspindel 3 abgewandten Ende der Antriebswelle 6 ist ein axial mit der Welle 6 verschiebbarer Drehgeber 19 angeordnet, der die Drehgeschwindigkeit beziehungsweise Drehposition der Antriebswelle 6 erfasst. Mit ihm kann durch die drehfeste Kupplung zur Spindelkopfwelle 11 auch deren Drehgeschwindigkeit beziehungsweise Drehposition erfasst werden.

Die Antriebswelle 6 besitzt eine zentrale Bohrung, durch die Schmiermittel zum Werkzeug geschickt werden kann. Da der Spindelkopf 3 von der Antriebseinrichtung 2 abnehmbar gestaltet ist, besitzt die Zugstange 11 einen zur Antriebseinrichtung 2 gerichteten Rohrfortsatz 21, der in die Bohrung 20 ragt. Zur Weiterleitung des Schmiermittels besitzt die Zugstange 12 ebenfalls eine nur in Teilbereichen angedeutete Bohrung. Um das Einstecken des rohrförmigen Fortsatzes 21 in die Bohrung 20 zu erleichtern, besitzt die Antriebswelle 6 an der der Zugstange zugewandten Seite eine trichterförmige Aufnahme 22.

Beim Ausstoßen des Werkzeugs wird die notwendige Kraft mittels des Vorspanndrucks der Lagerbüchsen über die Lager erzeugt. Die Ausstoßkräfte sind im Allgemeinen so gering, dass die Lager keinen Schaden nehmen. Die zwischen der Antriebswelle 6 und der Spindelkopfwelle 11 befindliche Kupplung einschließlich Keilwellenende 16 und Hohlrad 17 muss lang genug gestaltet sein, um diesen Hub zum Werkzeugausstoß zuzulassen. Die Drücke des Hydrauliksystems werden so eingestellt, dass die Antriebswelle 6 im Betrieb an der Zugstange 12 axial angelegt bleibt. Somit kann die Antriebswelle 6 als Verlängerung der Zugstange angesehen werden und damit auch deren Position gemessen werden. Alternativ könnte, wie oben bereits angedeutet wurde, die Antriebswelle 6 auch einteilig mit der Zugstange 12 gebildet sein, so dass die Zugstangenposition auch an der Antriebswelle abgefragt werden kann.

Zum Einbringen des Schmiermittels in die Antriebswelle ist an dem der Vorsatzspindel 3 abgewandten Ende der Antriebswelle 6 eine Dreheinführung 23 vorgesehen. Die Dreheinführung 23 muss in diesem Fall nicht speziell gelagert werden, da sie auf die Antriebswelle 6 montiert wird und mit ihr gelagert ist.

Mit dieser Konstruktion ist grundsätzlich ein Werkzeugwechsel bei drehender Spindeleinheit möglich, da nicht wie beim Stand der Technik zum Werkzeugausstoß ein Kolben auf die stillstehende Zugstange drücken muss. Dies bedeutet, dass keine Sicherung vorgesehen werden muss, die gewährleistet, dass die Spindel zum Werkzeugwechsel stillsteht.

## Patentansprüche

1. Spindelvorrichtung für Werkzeugmaschinen mit
- einer Antriebseinrichtung (2), die eine Antriebswelle (6) umfasst,
- einer Spindelkopfeinrichtung (3), deren hohle Spindelkopfwelle (11) von der Antriebseinrichtung (2) antreibbar ist, zur Aufnahme eines Werkzeugs und
- einer Zugstange (12), die in der hohlen Spindelkopfwelle (11) axial verschiebbar angeordnet ist,
**gekennzeichnet durch**
- eine Verschiebeeinrichtung, mit der die Antriebswelle (6) axial verschiebbar ist, wobei die Antriebswelle (6) mit der Zugstange (12) mechanisch gekoppelt ist, so dass die Zugstange (12) mit der Verschiebeeinrichtung axial verschiebbar ist.

2. Spindelvorrichtung nach Anspruch 1, wobei die Spindelkopfeinrichtung (3) und die Antriebseinrichtung (2) voneinander trennbar sind, und auch die Antriebswelle (6) und die Zugstange (12) trennbar gekoppelt sind.

3. Spindelvorrichtung nach Anspruch 1 oder 2, wobei die Spindelkopfwelle (11) an dem zu der Antriebswelle (6) zugewandten Ende als Keilwelle (16) und die Antriebswelle (6) an ihrer Stirnseite als entsprechendes kupplungsfähiges Hohlrad (17) ausgeformt sind.

4. Spindelvorrichtung nach einem der Ansprüche 1 bis 3, wobei die Antriebswelle (6) eine zentrale Bohrung (20) zum Medientransport besitzt, in die herausnehmbar ein Rohr der Zugstange mündet.

5. Spindelvorrichtung nach einem der Ansprüche 1 bis 3, wobei die Zugstange (12) eine zentrale Bohrung zum Medientransport besitzt, in die herausnehmbar ein Rohr der Antriebswelle (6) mündet.

6. Spindelvorrichtung nach einem der Ansprüche 1 bis 5, wobei die Antriebswelle (6) mit der Zugstange (12) einteilig ausgeformt ist.

7. Spindelvorrichtung nach einem der Ansprüche 1 bis 6, wobei die Antriebseinrichtung (2) einen Elektromotor, dessen Rotor (5) auf die Antriebswelle (6) montiert ist, umfasst.

8. Spindelvorrichtung nach Anspruch 7, wobei der Stator (4) des Elektromotors den Rotor (5) in jeder Verschiebeposition vollständig umgibt.

9. Spindelvorrichtung nach einem der Ansprüche 1 bis 8, wobei die Antriebswelle (6) in Lagerhülsen (7,8) gelagert ist, die axial verschiebbar sind.

10. Spindelvorrichtung nach einem der Ansprüche 1 bis 9, wobei die Verschiebeeinrichtung nach einem hydraulischen, pneumatischen oder elektromechanischen Prinzip arbeitet.

11. Spindelvorrichtung nach einem der Ansprüche 1 bis 10, wobei die Verschiebeeinrichtung derart ansteuerbar ist, dass die Antriebswelle (6) auch während des Betriebs axial an der Zugstange (12) anliegt, so dass eine Abfrageeinrichtung (19), mit der die axiale Position der Antriebswelle (6) abgreifbar ist, somit auch indirekt zum Abgreifen der axialen Position der Zugstange (12) verwendbar ist.

12. Verfahren zum Betreiben einer Spindelvorrichtung für Werkzeugmaschinen, die eine Antriebseinrichtung (2) mit einer Antriebswelle (6) und eine Spindelkopfeinrichtung (3) zur Aufnahme eines Werkzeugs mit einer Zugstange (12) umfasst,
**gekennzeichnet durch**
- axiales Verschieben der Zugstange (12) mit Hilfe der Antriebswelle (6) in eine erste Position und
- axiales Zurückschieben der Antriebswelle (6) in eine zweite Position, so dass die Zugstange (12) zurückbewegt wird oder zurückbewegbar ist.

13. Verfahren nach Anspruch 12, wobei die Antriebswelle (6) während des Betriebs axial an der Zugstange (12) anliegt, so dass die Position der Zugstange (12) indirekt über die Position der Antriebswelle (6) messbar ist.
